# EUROPEAN PATENT APPLICATION

(11) **EP 4 495 560 A1**
(43) Date of publication of application: **22.01.2025**
(21) Application number: 22931801.9
(22) Date of filing: 18.11.2022
(51) Int. Cl.: G01J 3/28

(54) **SPECTRUM SCANNING ASSEMBLY AND OPTICAL SEMICONDUCTOR ELEMENT**

(30) Priority: 15.03.2022 CN 202210252871
(71) Applicant: Innolight Technology (Suzhou) Ltd., Suzhou, Jiangsu 215000 (CN)
(72) Inventor: LI, Chenlei, Suzhou, Jiangsu 215000 (CN); ZHENG, Xuezhe, Suzhou, Jiangsu 215000 (CN)
(74) Representative: Becker, Eberhard
(86) International application number: PCT/CN2022/132891
(87) International publication number: WO 2023/173789

(57) **Abstract**

A spectrum scanning assembly (100) and an optical semiconductor element. The spectrum scanning assembly (100) comprises a band-pass waveguide assembly (10) and a plurality of micro-ring resonators (20), the band-pass waveguide assembly (10) respectively being connected to the plurality of micro-ring resonators (20), wherein the band-pass waveguide assembly (10) is used for dividing an optical signal to be tested into a plurality of band-pass optical signals having different central wavelengths, and then respectively inputting the band-pass optical signals into the plurality of micro-ring resonators (20); the micro-ring resonators (20) are used for performing scanning for resonant wavelengths in the band-pass optical signals, so as to form first spectral information; and after beam combination is performed on a plurality of pieces of first spectral information, which are formed by the plurality of micro-ring resonators (20), second spectral information can be formed. The spectrum scanning assembly (100) is integrated on the optical semiconductor element. The spectrum scanning assembly (100) and the optical semiconductor element have high spectral scanning precision.

## Description

### Technical Field

The invention relates to the field of optical scanning technology, and in particular to a spectrum scanning assembly and an optical semiconductor element.

### Related Art

With the development of optical scanning technology, spectral technology, as a non-destructive and rapid detection method, can qualitatively and quantitatively analyze the object to be tested, is suitable for real-time online monitoring, and has been applied in many fields. With the rapid development of industries such as environmental monitoring, biomedicine, lidar, and holographic display, and as the requirements for spectral analysis instruments become more and more diversified, among the trends, in order to enable the spectrometer to be better used in scenarios such as lidar and biosensing that require real-time detection and display, the scanning speed of the spectrometer needs to be further improved.

In the related technology, the most common spectrometer is the scanning grating spectrometer. Since the slit is introduced into the dispersion system of the scanning grating spectrometer, the light flux is low, and the light flux directly affects the signal-to-noise ratio of the information. The signal-to-noise ratio is positively correlated with the precision of spectral scanning to a certain extent, in order to improve the precision of spectral scanning, the light flux can be increased by increasing the width of the slit to improve the signal-to-noise ratio and ensure scanning precision.

However, since the slit width cannot be too large, the adjustment of the light flux is limited and the signal-to-noise ratio cannot be further improved, resulting in low spectral scanning precision.

### SUMMARY OF INVENTION

### Technical Problem

Based on the above, it is necessary to provide a spectrum scanning assembly and an optical semiconductor element to address the above-mentioned complex structural problem.

### Solution to Problem

### Technical solutions

In the first aspect, the invention provides a spectrum scanning assembly, the assembly includes a band-pass waveguide assembly and a plurality of micro-ring resonators, and the band-pass waveguide assembly is respectively connected to the plurality of micro-ring resonators; in which:
The band-pass waveguide assembly is used to divide the optical signal to be tested into a plurality of band-pass optical signals with different central wavelengths and then respectively input into the plurality of micro-ring resonators;
Each of the micro-ring resonators is used to perform scanning for resonant wavelengths in the band-pass optical signals to form first spectral information; in which after beam combination is performed on multiple pieces of first spectral information formed by the plurality of micro-ring resonators, second spectral information may be formed.

In an embodiment, the band-pass waveguide assembly includes an optical waveguide assembly and a plurality of band-pass filters, the optical waveguide assembly is respectively connected to the plurality of band-pass filters, and the plurality of band-pass filters are respectively connected to the plurality of micro-ring resonators; in which:
The optical waveguide assembly is used to input the optical signal to be tested into each of the band-pass filters;
Each of the band-pass filters is used to filter the optical signal to be tested to form the band-pass optical signals and input the band-pass optical signals into the micro-ring resonator correspondingly connected thereto; in which the band-pass optical signal is an optical signal within the passband range of the band-pass filter in the optical signal to be tested.

In an embodiment, the optical waveguide assembly includes an optical input channel, an optical path switching unit, and multiple optical output channels, in which:
The optical input channel is used to receive the optical signal to be tested and then input into the optical path switching unit;
The optical path switching unit is used to input the optical signal to be tested into any one of the optical output channels;
Each of the optical output channels is used to input the signal to be tested into the band-pass filter correspondingly connected thereto.

In an embodiment, the optical path switching unit includes m levels of optical switching assemblies, each level of the optical switching assemblies includes a plurality of first input ends and a plurality of first output ends, the first input end of the first level of optical switching assembly is connected to the optical input channel, the first output end of the k-th level of optical switching assembly is connected to the first input end of the k+1-th level of optical switching assembly, and the multiple first output ends of the m-th level of optical switching assembly are respectively connected to the multiple optical output channels, k and n are both natural numbers, 1≤k<n, 2≤n; in which:
The m-level optical switching assembly is used to input the optical signal to be tested into any optical output channel.

In an embodiment, the optical path switching unit includes an optical power splitter, and the optical power splitter is respectively connected to the optical input channel and the multiple optical output channels; in which:
The optical power splitter is used to input the optical signal to be tested into any optical output channel.

In an embodiment, the optical path switching unit includes an optical switch and a plurality of optical power splitters, the optical switch is respectively connected to the optical input channel and the plurality of optical power splitters, and the plurality of optical power splitters are respectively connected to the plurality of optical output channels, in which:
The optical switch is used to input the optical signal to be tested into any optical power splitter;
Each of the optical power splitters is used to input the optical signal to be tested into the optical output channel correspondingly connected thereto.

In an embodiment, the optical path switching unit includes an optical power splitter and a plurality of optical switches, the optical power splitter is respectively connected to the optical input channel and the plurality of optical switches, and the plurality of optical switches are respectively connected to the plurality of optical output channels, in which:
The optical power splitter is used to input the optical signal to be tested into any optical switch.

Each of the optical switches is used to input the optical signal to be tested into the optical output channel correspondingly connected thereto.

In an embodiment, the optical waveguide assembly includes a plurality of optical transmission channels, and a plurality of the band-pass filters are sequentially connected through a plurality of the optical transmission waveguides to form n levels of filtering structures, in which:
The plurality of optical transmission waveguides are used to sequentially input the optical signal to be tested into each band-pass filter of the n levels of filtering structures.

In an embodiment, the central wavelengths of the passbands of the plurality of band-pass filters are different.

In an embodiment, each of the band-pass filters includes one of a Bragg grating and a filter unit formed by cascading a plurality of micro-ring resonator cavities.

In an embodiment, the band-pass waveguide assembly includes a wavelength division multiplexer and a multi-channel optical output channel, and the multi-channel optical output channel connects the wavelength division multiplexer to a plurality of micro-ring resonators respectively; in which:
The wavelength division multiplexer is used to divide the optical signal to be tested into multiple band-pass optical signals, and then input into the multiple micro-ring resonators respectively.

In the spectrum scanning assembly, the band-pass waveguide assembly is respectively disposed with the plurality of micro-ring resonators, and the band-pass waveguide assembly may input the band-pass optical signals with different central wavelengths into the plurality of micro-ring resonators respectively, each micro-ring resonator scans the resonant wavelength of the band-pass optical signal received thereof to form first spectral information, after beam combination is performed on the plurality of first spectral information, second spectral information may be formed, and the second spectral information is the complete spectral information of the optical signal to be tested; the above-mentioned structural arrangement avoids the use of the slit of the conventional scanning grating spectrometer, is beneficial to increase the signal-to-noise ratio, and effectively improves the precision of spectrum scanning.

In the second aspect, the invention further provides an optical semiconductor element, in which the spectrum scanning assembly is integrated on the optical semiconductor element.

### Beneficial effects of Invention

### Beneficial effects

In the optical semiconductor, through the disposition of the spectrum scanning assembly, high-precision spectrum scanning can be achieved.

### BRIEF DESCRIPTION OF DRAWINGS

### Description of drawings

In order to more clearly illustrate the technical solutions in the embodiments of the present application or the conventional technology, the drawings required for use in the description of the embodiments or the conventional technology will be briefly introduced below. Certainly, the drawings described below are only some embodiments of the present application, for ordinary technicians in this field, other drawings may be obtained based on the drawings without any creative work.
FIG. 1 is a schematic structural diagram of a spectrum scanning assembly according to an embodiment;
FIG. 2 is a schematic structural diagram of a band-pass waveguide assembly according to an embodiment;
FIG. 3 is a schematic structural diagram of an optical waveguide assembly according to an embodiment;
FIG. 4 is a schematic structural diagram of a spectrum scanning assembly integrated with n levels of optical switching assemblies according to an embodiment;

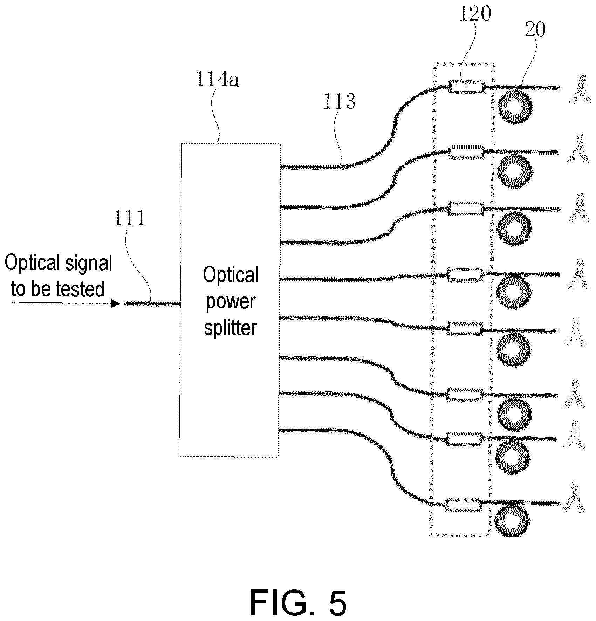

FIG. 5 is a schematic structural diagram of a spectrum scanning assembly integrated with an optical power splitter according to an embodiment;
FIG. 6 is a schematic structural diagram of a spectrum scanning assembly integrated with an optical switch and an optical power splitter according to an embodiment;
FIG. 7 is a schematic structural diagram of a spectrum scanning assembly integrated with an optical switch and an optical power splitter according to another embodiment;
FIG. 8 is a schematic structural diagram of a spectrum scanning assembly integrated with n levels of filtering structures according to another embodiment;
FIG. 9 is a schematic structural diagram of a band-pass waveguide assembly according to another embodiment.

### DESCRIPTION OF EMBODIMENTS

### Embodiments of the invention

In order to make the above-mentioned purposes, features, and advantages of the invention more comprehensible, specific embodiments of the invention are described in detail below with reference to the accompanying drawings. In the following description, numerous specific details are set forth in order to provide a thorough understanding of the invention. However, the invention can be implemented in many other ways than the manners described herein, and persons skilled in the art may make similar improvements without departing from the scope of the invention. Therefore, the invention is not limited to the specific embodiments disclosed below.

In the description of the invention, it should be understood that the terms "first" and "second" are used for descriptive purposes only and cannot be understood as indicating or implying relative importance or implicitly indicating the number of the indicated technical features. Therefore, features defined as "first" or "second" may explicitly or implicitly include at least one of such features. In the description of the invention, "several" means one or more, and "multiple" means at least two, such as two, three, and unless otherwise clearly defined, the meanings of "multi-groups", "multi-paths", and "multi-bundles" are the same and will not be elaborated here.

In the invention, unless otherwise expressly specified or limited, the terms "installed", "connected", "connected", "fixed" and the like should be understood in a broad sense, for example, the terms may be a fixed connection, a detachable connection, or an integral structure; the terms may be a mechanical connection or an electrical connection; the terms may be directly connected or indirectly connected through an intermediate medium, and may be internal communication between two elements or interaction between two elements, unless otherwise clearly defined. For persons skilled in the art, the specific meanings of the above terms in the invention may be understood according to specific circumstances.

It should be noted that when an element is referred to as being "fixed to" or "disposed on" another element, the situation may be directly on the other element or there may be an intermediate element. When an element is considered to be "connected to" another element, the situation may be directly connected to the other element or there may be an intermediate element at the same time.

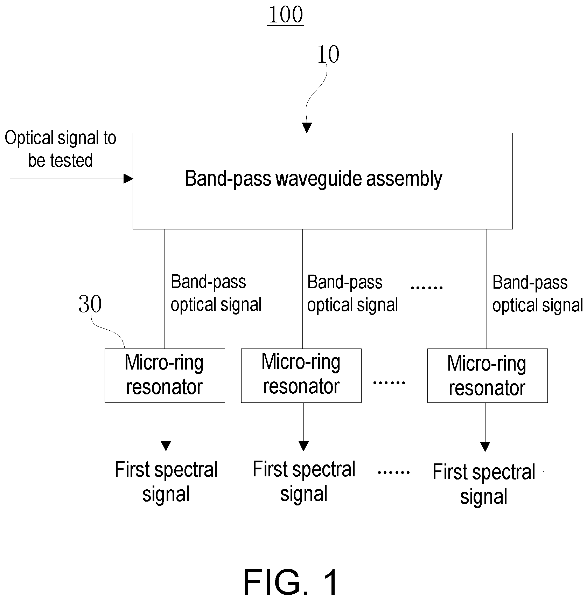

Referring to FIG. 1, the invention provides a spectrum scanning assembly 100, which includes a band-pass waveguide assembly 10 and a plurality of micro-ring resonators 20. The band-pass waveguide assembly 10 is connected to the plurality of micro-ring resonators 20, respectively. In the embodiment:
The band-pass waveguide assembly 10 is used to divide the optical signal to be tested into a plurality of band-pass optical signals with different central wavelengths and then respectively input the plurality of band-pass optical signals into a plurality of micro-ring resonators 20. The plurality of band-pass optical signals are respectively disposed correspondingly with the plurality of micro-ring resonators in a one-to-one manner.

Each micro-ring resonator 20 includes a micro-ring resonator cavity and a first phase shifter (PS). The free spectrum range of the micro-ring resonator cavity covers the central wavelength of the band-pass optical signal received by the micro-ring resonator, the first phase shifter is used to drive the micro-ring resonator cavity to scan the resonant wavelength in the band-pass optical signal to form first spectral information; after beam combination is performed on the plurality of first spectral information respectively formed by the plurality of micro-ring resonators 20, second spectral information may be formed. The second spectral information is complete spectral information associated with the optical signal to be tested.

It is worth mentioning that the structure of the micro-ring resonator 20 is not limited, and the structure of the resonator cavity includes but is not limited to one of a single-ring micro-ring and a racetrack micro-ring.

In the above-mentioned components, by cooperating with the band-pass waveguide assembly 10 and the plurality of micro-ring resonators 20, the band-pass waveguide assembly 10 may input the band-pass optical signals with different central wavelengths into the plurality of micro-ring resonators 20 respectively, each micro-ring resonator 20 scans the resonant wavelength of the band-pass optical signal received thereof, thereby first spectral information is formed. After beam combination is performed on the multiple pieces of first spectral information, second spectral information may be formed, and the second spectral information is the complete spectral information of the optical signal to be tested; the above-mentioned structural arrangement avoids the use of the slit of the conventional scanning grating spectrometer, is beneficial to increase the signal-to-noise ratio, and effectively improves the precision of spectrum scanning.

In some embodiments, referring to FIG. 1, the band-pass waveguide assembly 10 includes an optical waveguide assembly 110 and a plurality of band-pass filters 120; the optical waveguide assemblies 110 are respectively connected to the plurality of band-pass filters 120. The plurality of band-pass filters 120 are connected to the plurality of micro-ring resonators 20 correspondingly in a one-to-one manner. In the embodiment:
The optical waveguide assembly 110 is a transmission device for the optical signal to be tested, which is used to control the transmission path of the optical signal to be tested, so as to input the optical signal to be tested into each band-pass filter 120 respectively; it is worth mentioning that the structure of the optical waveguide assembly 110 is not limited. In some embodiments, the optical waveguide assembly 110 may be formed by an optical waveguide and an optical device for optical signal transmission, or may be directly formed by a plurality of optical waveguides.

Each band-pass filter 120 may output an optical signal with a wavelength within the corresponding passband range thereof, which is used to perform band-pass filtering on the optical signal to be tested to form a band-pass optical signal, and input the band-pass optical signal into the micro-ring resonator 20 correspondingly connected thereto.

In the embodiment, the band-pass optical signal is an optical signal within the passband range of the band-pass filter 120 in the optical signal to be tested; the structure of the band-pass filter 120 is not limited, which includes but not limited to a fiber Bragg grating (FBG) and a filter unit formed by cascading multiple micro-ring resonator cavities. For example, in some embodiments, the band-pass filter 120 is a Bragg grating, and the structural setting reduces the crosstalk between multiple channels in the band-pass filter 120 and reduces the insertion loss fluctuation in each channel of the band-pass filter 120, which is beneficial to increase the signal-to-noise ratio of the spectrum scanning assembly.

It is worth mentioning that the central wavelengths of the passbands of the multiple band-pass filters 120 are different, so that the multiple band-pass filters 120 respectively output multiple band-pass optical signals within different passband ranges, that is, through the above arrangement, the optical signal to be tested may be divided into multiple band-pass optical signals within different passband ranges, and the multiple band-pass optical signals within different passband ranges may be output respectively, making the collection, output control, and resonant wavelength scanning of the optical signal more convenient.

For example, in some embodiments, the band-pass filter 120 includes n band-pass filters 120, the n band-pass filters 120 together form n levels of cascaded band-pass filtering structures (hereinafter referred to as n levels of filtering structures), and the central wavelengths of the passbands of the first level to the n-th level band-pass filters 120 are different and sequentially increase; in addition, the passbands of the first level to the n-th level band-pass filters 120 are connected in series, that is, the passband of the k-th band-pass filter 120 is connected to the passband of the k+1-th band-pass filter 120, in which n and i are both natural numbers, 1<k<i, 2<i; for example, the passband range of the first level of band-pass filter 120 is [a, b], the passband range of the second level of band-pass filter 120 is [b, c], the upper limit value of the passband of the first level of band-pass filter 120 is b, and the lower limit value of the passband of the second level of band-pass filter 120 is b, the passbands of the first level of band-pass filter 120 and the passband of the second level of band-pass filter 120 are connected at b, and the passbands of other two adjacent stages of the band-pass filter 120 are connected in the same principle, so details will not be elaborated here. The above-mentioned n levels of filtering structures may divide the optical signal into n portions of band-pass optical signals and output.

In the spectrum scanning assembly, the optical waveguide assembly 110 is respectively connected to the plurality of band-pass filters 120. The optical waveguide assembly 110 may input the signals to be tested into the plurality of band-pass filters 120 for filtering to form the plurality of band-pass optical signals, and the micro-ring resonator is connected to each of the band-pass filters 120. Each microcirculation resonator cavity performs scanning for the resonant wavelength on the corresponding band-pass optical signal thereof to form first spectral information, after beam combination is performed on the multiple pieces of first spectral information, second spectral information may be formed.

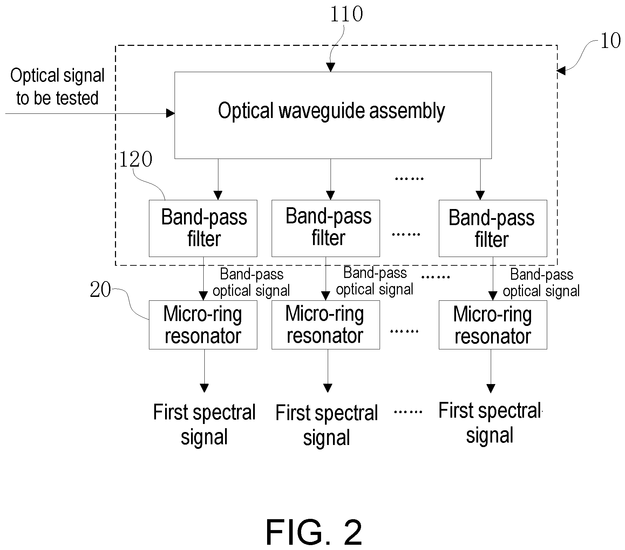

Furthermore, in order to more specifically understand the structural arrangement of the spectrum scanning assembly, some embodiments will be given below for detailed description, but it may be understood that the spectrum scanning assembly of the present application is not limited to the following structural forms. Specifically:
As shown in FIG. 1 to FIG. 3, in some embodiments, the optical waveguide assembly 110 includes an optical input channel 111, an optical path switching unit 112, and multiple optical output channels 113. The optical path switching unit 112 includes an optical input port and a plurality of optical output ports. The optical path switching unit 112 is connected to the optical input channel 111 through the optical input port, and the optical path switching unit 112 is respectively connected to the plurality of optical output channels 113 through the plurality of optical output ports.

It is worth mentioning that the structural forms of the optical input channel 111 and the optical output channel 113 are not limited. For example, in some embodiments, the optical input channel 111 and the optical output channel 113 are both optical signal transmission channels formed by optical waveguides, and the setting is beneficial to the integrated design of the spectrum scanning assembly. Certainly, in other embodiments, it is also feasible that the optical input channel 111 and the optical output channel 113 are other optical structures capable of transmitting optical signals.

In this embodiment, the optical input channel 111 is used to receive the optical signal to be tested and then input into the optical path switching unit 112; the optical path switching unit 112 is used to input the optical signal to be tested into any optical output channel 113; specifically, the optical path switching unit 112 is used to receive the optical signal to be tested through the optical input end thereof, and to select any optical output port to input the optical signal to be tested into the optical output channel 113 correspondingly connected to the currently selected optical output port by controlling the transmission path of the optical signal to be tested inside the optical path switching unit 112; each optical output channel 113 is used to input the signal to be tested into the correspondingly connected band-pass filter 120 for filtering.

It should be noted that the specific structural form of the optical path switching unit 112 is not limited, which includes but is not limited to at least one of an optical switch and an optical power splitter.

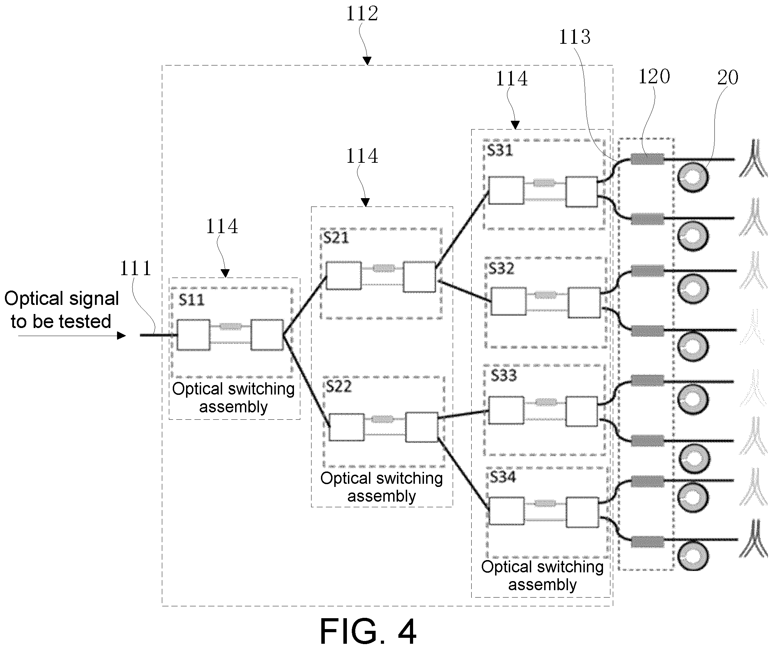

As shown in FIG. 1 to FIG. 4, in some embodiments, the optical path switching unit 112 includes m levels of optical switching assemblies 114.

Specifically, each level of the optical switching assemblies 114 includes several first input ends and several first output ends, each first input end is used to receive an optical signal, each first output end is used to output an optical signal, and the first input end of the first level of optical switching assembly 114 is connected to the optical input channel 111; the first output end of the k-th level of optical switching assembly 114 is connected to the first input end of the k+1-th level of optical switching assembly 114; a plurality of first output ends of the m-th level of optical switching assembly 114 are respectively connected to the multiple optical output channels 113. Both m and k are natural numbers, 1≤k<m, 2≤m.

Furthermore, the m level of optical switching assemblies 114 are m levels of cascaded structures formed by a plurality of optical switches, and each level of the optical switching assembly 114 includes several optical switches, each optical switch includes several first input ends, several first output ends, and a second phase shifter (PS, full name is phase shifter).

In the embodiment, the second phase shifter adopts the electro-optical effect of the PIN junction diode for phase modulation, or adopts the thermal tuning of a metal electrode for phase modulation, so as to realize the switching of different first output ends to output optical signals in each optical switch, here, the phase modulation speed of the second phase shifter may reach GHz (gigahertz, or gigahertz) level, so that each optical switch may quickly select one of the first output ends to output the optical signal.

The quantities of first input ends and second output ends of each optical switch may be set according to the actual optical path design requirements.

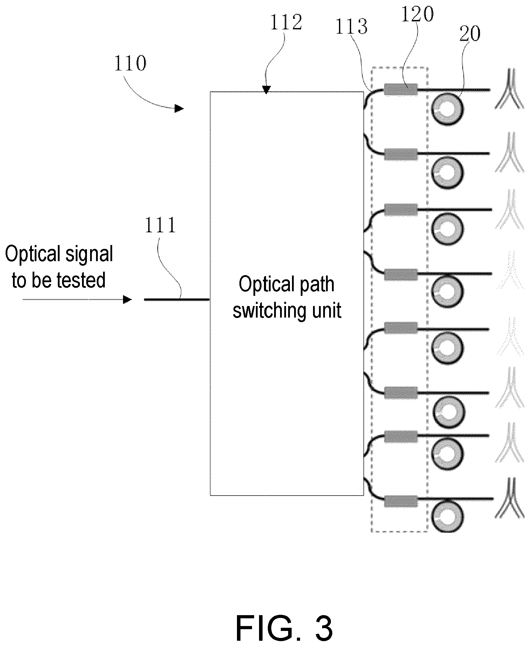

It is worth mentioning that the structure of the optical switch is not limited. For example, in some embodiments, the optical path switching unit 112 includes three levels of optical switching assemblies 114, the optical switch of each level of the optical switching assembly 114 is a 1×2 optical switch formed by a Mach-Zehnder interferometer (MZI), in which the first level of optical switching assembly 114 includes a 1×2 optical switch (S11 in FIG. 3), the second level of optical switching assembly 114 includes two 1×2 optical switches (S21 and S22 in FIG. 3), the third level of optical switching assembly 114 includes four 1×2 optical switches (S31, S32, S33, and S34 in FIG. 3). Each 1×2 optical switch includes a first input end, two first output ends, and the second phase shifter. The first level of 1×2 optical switch is connected to the optical input channel 111 through the first input end thereof, the first level of 1×2 optical switch is connected to the first input ends of the two second level of 1×2 optical switches through the two first output ends thereon, each 1×2 optical switch of the second level is connected to the first input end of two 1×2 optical switches of the third level through the two first output ends thereon, each 1×2 optical switch of the third level is connected to two optical output channels 113 respectively through two first output ends thereon.

During each transmission process of the optical signal to be tested, the second phase shifter is used to control each level of the optical switching assembly 114 to select a different first output end to output the optical signal to be tested, so as to control the transmission path of the optical signal to be tested in the m levels of optical switching assemblies 114, and by adjusting the transmission path of the optical signal to be tested, the optical signal to be tested may be input into different band-pass filters 120. Specifically:
First, the first level of optical switching assembly 114, receives an optical signal to be tested from the optical input channel 111 through the first input end thereof, and select any first output end thereon to input the optical signal to be tested into a first input end of the second level of optical switching assembly 114 correspondingly connected to the currently selected first output end; then, the k-th level of optical switching assembly located after the first level of optical switching assembly 114, receives an optical signal to be tested from a first output end of the previous level of optical switching assembly 114 through any first input end thereon, and input the optical signal to be tested into a first input end of the next level of optical switching assembly 114 correspondingly connected to the first output end currently selected through any first output end thereon; finally, the n-th level of optical switching assembly 114 receives the optical signal to be tested from the previous level through the first input end thereon, and selects any first output end thereon to input the optical signal to be tested into the band-pass filter 120 correspondingly connected to the currently selected first output end.

In the above structure, through performing phase modulation on the second phase shifter of each level of optical switch, since the phase modulation speed of the second phase shifter is fast (up to GHz level), the m levels of optical switching assemblies 114 may quickly switch different transmission paths to transmit the optical signal to be tested to the band-pass filter 120. Therefore, the spectrum scanning of the optical signal to be tested with thousands of sampling points can be completed in microseconds, thereby the high-speed spectrum scanning function of the spectrum scanning assembly is achieved.

As shown in 1-3 and 5, in some embodiments, the optical path switching unit 112 includes an optical power splitter 114a.

The optical power splitter 114a is respectively connected to the optical input channel 111 and the multiple optical output channels 113, which is used to input the optical signal to be tested into any one of the optical output channels 113; specifically, the optical power splitter 114a includes several second input ends and several second output ends, the second input end is connected to the optical input channel 111, and is used to receive the optical signal; the plurality of second output ends are connected to the multiple optical output channels 113 correspondingly in a one-to-one manner, the plurality of second output ends are respectively used to output optical signals of different characteristic wavelengths, the characteristic wavelength includes one of a single wavelength value, a wavelength set formed by multiple single wavelength values, and a wavelength value range.

It is worth mentioning that the quantity of optical power splitters 114a and the quantity of second input ends and second output ends of each optical power splitter 114a are not limited, which may be specifically set according to actual optical path design requirements. For example, in some embodiments, the optical input channel 111 is one channel, the optical output channel 113 is n channels, and the optical power splitter 114a is 1×n power splitters, the 1×n power splitters include a second input end and n second output ends, and the n second output ends are connected to the n optical output channels 113 correspondingly in a one-to-one manner. In some other embodiments, the quantity of optical input channels 111 is two, the quantity of optical output channels 113 is n, and the quantity of optical power splitters 114a is two. Each optical power splitter 114a includes 1x(n/2) power splitters, each of the 1x(n/2) power splitters includes a second input end and n/2 second output ends, the n/2 second output ends are connected to the n/2 optical output channels 113 correspondingly in a one-to-one manner, and the other n/2 second output ends are connected to the other n/2 optical output channels 113 correspondingly in a one-to-one manner. Certainly, in other embodiments, the quantity of optical input channels 111, the quantity of optical power splitters 114a, and the quantity of second input ends and second output ends of each optical power splitter 114a may be adjusted, the optical path switching unit 112 with different optical path structures may be provided, and details will not be elaborated here.

Compared with m levels of optical switching assemblies formed by multiple optical switches, the optical power splitter 114a can switch the transmission path of the optical signal to be tested without being connected to an external control circuit, here, the power consumption when controlling the optical switch through the control circuit is saved, which is beneficial to minimize the energy consumption of the spectrum scanning assembly.

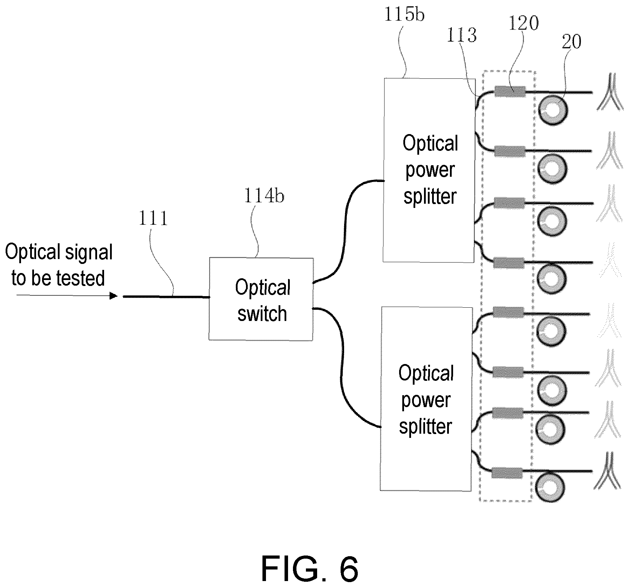

As shown in FIG. 1 to FIG. 3 and FIG. 6, in some embodiments, the optical path switching unit 112 includes an optical switch 114b and a plurality of optical power splitters 115b.

The optical switch 114b is respectively connected to the optical input channel 111 and the multiple optical power splitters 115b, and the multiple optical power splitters 115b are respectively connected to the multiple optical output channels 113.

Specifically, the optical switch 114b includes a third input end and a plurality of third output ends, and each optical power splitter 115b includes a fourth input end and a plurality of fourth output ends; in which the third input end is connected to the optical input channel 111, the third output ends are connected to the fourth input ends of the optical power splitters 115b correspondingly in a one-to-one manner, and the plurality of fourth output ends of the optical power splitters 115b are connected to the multiple optical output channels 113 correspondingly in a one-to-one manner.

The optical switch 114b is used to input the optical signal to be tested into any optical power splitter 115b; each optical power splitter 115b is used to input the optical signal to be tested into the optical output channel 113 correspondingly connected thereto, that is, to select any fourth output end and input the optical signal to be tested into the optical output channel 113 connected to the currently selected fourth output end.

It is worth mentioning that the structural arrangement of the optical switch 114b and the optical power splitter 115b of this embodiment is the same as the structural arrangement of the optical switch and the optical power splitter in the other embodiments described above, so details will not be repeated here.

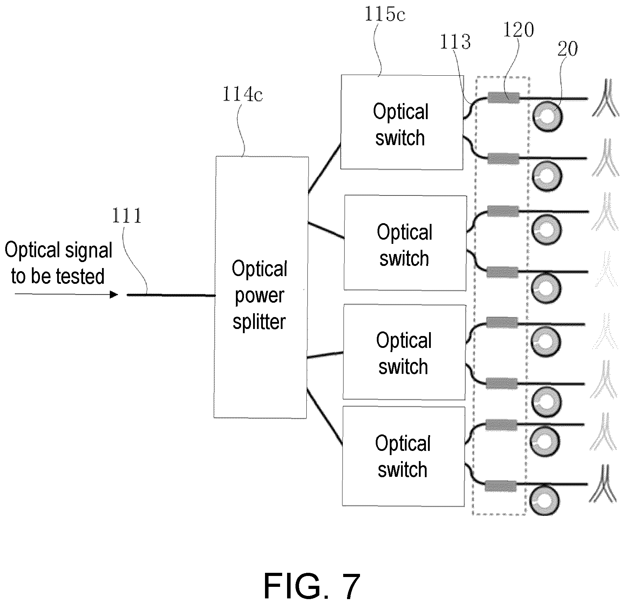

As shown in FIG. 1 to FIG. 3 and FIG. 7, in some embodiments, the optical path switching unit 112 includes an optical power splitter 114c and a plurality of optical switches 115c; the optical power splitter 114c is respectively connected to the optical input channel 111 and the multiple optical switches 115c, and the multiple optical switches 115c are respectively connected to the multiple optical output channels 113.

Specifically, the optical power splitter 114c includes a fifth input end and a plurality of fifth output ends, and each optical switch 115c includes a sixth input end and a plurality of sixth output ends, in which the fifth output end is connected to the optical input channel 111, the plurality of fifth output ends are respectively connected to the sixth input ends of the plurality of optical switches 115c, and the plurality of sixth output ends of each optical switch 115c are respectively connected to the plurality of optical output channels 113.

The optical power splitter 114c is used to input the optical signal to be tested into any optical switch 115c; each optical switch 115c is used to input the optical signal to be tested into the optical output channel 113 correspondingly connected thereto, that is, each optical switch 115c selects any sixth output end after receiving the optical signal to be tested, and inputs the optical signal to be tested into the optical output channel 113 connected to the currently selected sixth output end.

It is worth mentioning that the structural arrangement of the optical switch 115c and the optical power splitter 114c of this embodiment is the same as the structural arrangement of the optical switch and the optical power splitter in the other embodiments described above, so details will not be repeated here.

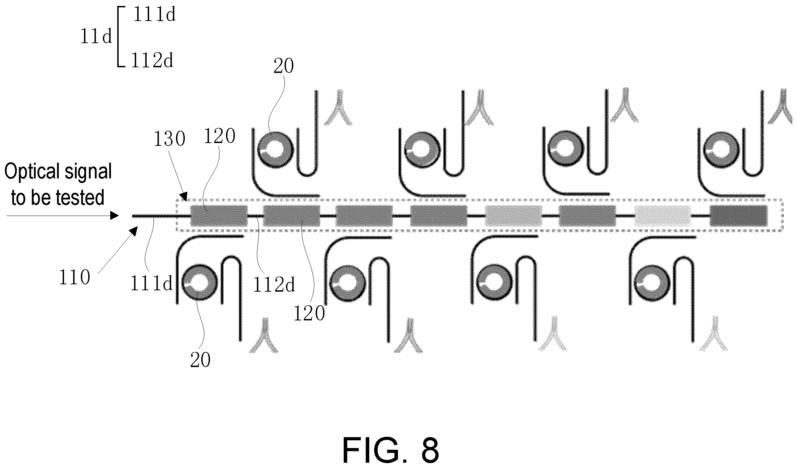

As shown in FIG. 1 and FIG. 8, in some embodiments, the optical waveguide assembly 110 includes a plurality of optical transmission channels 11d, and the plurality of band-pass filters 120 are sequentially connected through the plurality of optical transmission channels 11d to form an n levels of filtering structures 130.

In the embodiment, each level of the n levels of filtering structures 130 is at least correspondingly disposed with one band-pass filter 120; the optical transmission channel 11d is an optical signal transmission channel formed by an optical waveguide, and the disposition is beneficial to the integrated design of the spectrum scanning assembly. Certainly, in other embodiments, it is also feasible that the optical transmission channel 11d is other optical structures capable of transmitting optical signals.

The plurality of optical transmission channels 11d are used to sequentially input the optical signal to be tested into each band-pass filter 120 of the n levels of filtering structures 130. Specifically, the plurality of optical transmission channels include an input channel 111d and a plurality of intermediate channels 112d, and the input channel 111d of the optical waveguide assembly 110 is connected to the first level of band-pass filter 120 of the n levels of filtering structures 130; two adjacent band-pass filters 120 in the n levels of filtering structures 130 are connected via the intermediate channel 112d.

The input channel 111d is used to input the optical signal to be tested into the first level of band-pass filter 120. After entering the first level of band-pass filter 120, the optical signal to be tested is sequentially input into the first level to the N-th level of band-pass filters 120 through the plurality of intermediate channels 112d; the band-pass filter 120 of each level receives the optical signal to be tested and performs band-pass filtering to form a band-pass optical signal, and outputs the band-pass optical signal to the micro-ring resonator 20 correspondingly connected thereto; the phase modulation of the first phase shifter on the micro-ring resonator 20 is controlled, so that the micro-ring resonator cavity on each micro-ring resonator 20 performs scanning for the resonant wavelength in the band-pass optical signal output by the band-pass filter 120 connected thereto, thereby the first spectral information is formed; finally, beam combination is performed on the first spectral signals formed by all micro-ring resonators 20 to obtain the second spectral information.

The above structural arrangement eliminates the need to switch the transmission path of the optical signal to be tested multiple times, which is beneficial to improve the scanning efficiency of the spectrum scanning assembly.

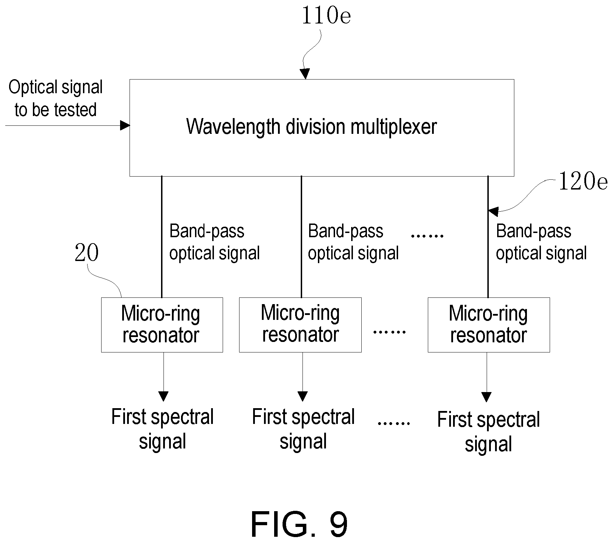

As shown in FIG. 1 and FIG. 9, in some embodiments, the band-pass waveguide assembly 10 includes a wavelength division multiplexer 110e and multiple optical output channel 120e, and the multiple optical output channels 120e connect the wavelength division multiplexer 110e to the plurality of micro-ring resonators 20 respectively; in which:
An optical output channel 120e, which includes but is not limited to an optical waveguide, is used to output an optical signal;
The wavelength division multiplexer 110e, that is, the Demux structure, is used to perform wavelength division processing after receiving the external optical signal to be tested to form multiple band-pass optical signals, and respectively input into multiple micro-ring resonators 20 through the multiple optical output channels 120e; the phase modulation of the first phase shifter on the micro-ring resonator 20 is controlled, so that the micro-ring resonator cavity on each micro-ring resonator 20 performs scanning for the resonant wavelength in the band-pass optical signal received thereof, thereby the first spectral information is formed; finally, beam combination is performed on the first spectral signals formed by all micro-ring resonators 20 to obtain the second spectral information.

It may be understood that the structural form of the optical waveguide in the above embodiments is not limited, and the optical waveguide includes but is not limited to at least one of one of SOI silicon-based optical waveguide, SiN silicon-based optical waveguide, and lithium niobate optical waveguide.

It may be understood that, in some embodiments, the first or second phase shifter includes but is not limited to one of a phase shifter formed by an SOI silicon-based optical waveguide and a PIN junction diode, and a phase shifter formed by an SOI silicon-based optical waveguide and a metal heater. In the embodiment, the first or second phase shifter is used to adopt the electro-optical effect of the PIN junction diode for phase modulation, or adopt the thermal tuning of a metal electrode for phase modulation, so as to achieve high-speed phase modulation, the phase modulation speed can reach GHz (gigahertz, or gigahertz) level, which is beneficial to improve the spectrum scanning efficiency of the spectrum scanning assembly.

The invention further provides an optical semiconductor element (not shown), in which the spectrum scanning assembly is integrated on the optical semiconductor element, and the configuration is beneficial to improve the integration of the optical semiconductor element.

The technical features of the above embodiments may be arbitrarily combined. To make the description concise, not all possible combinations of the technical features in the above embodiments are described. However, as long as there is no contradiction in the combination of the technical features, the combinations should be considered to be within the scope of this specification.

The embodiments only express several embodiments of the invention, and the description thereof is relatively specific and detailed, but should not be understood as limiting the scope of the invention patent. It should be pointed out that, for persons skilled in the art, several modifications and improvements may be made without departing from the concept of the invention, which all fall within the protection scope of the invention. Therefore, the protection scope of the patent for this invention shall be based on the appended claims.

## Claims

1. A spectrum scanning assembly, **characterized in that** the assembly comprises a band-pass waveguide assembly and a plurality of micro-ring resonators, and the band-pass waveguide assembly is respectively connected to the plurality of micro-ring resonators; wherein:
the band-pass waveguide assembly is configured to divide an optical signal to be tested into a plurality of band-pass optical signals with different central wavelengths and then respectively input into the plurality of micro-ring resonators;
each of the micro-ring resonators is configured to perform scanning for a resonant wavelength in the band-pass optical signal to form first spectral information; wherein after beam combination is performed on the plurality of first spectral information formed by the plurality of micro-ring resonators, second spectral information may be formed.

2. The spectrum scanning assembly according to claim 1, **characterized in that** the band-pass waveguide assembly comprises an optical waveguide assembly and a plurality of band-pass filters, the optical waveguide assembly is respectively connected to the plurality of band-pass filters, and the plurality of band-pass filters are respectively connected to the plurality of micro-ring resonators; wherein:
the optical waveguide assembly is configured to input the optical signal to be tested into each of the band-pass filters;
each of the band-pass filters is configured to filter the optical signal to be tested to form the band-pass optical signals and input the band-pass optical signals into the micro-ring resonator correspondingly connected thereto; wherein the band-pass optical signal is an optical signal within a passband range of the band-pass filter in the optical signal to be tested.

3. The spectrum scanning assembly according to claim 2, **characterized in that** the optical waveguide assembly comprises an optical input channel, an optical path switching unit, and a plurality of optical output channels, wherein:
the optical input channel is configured to receive the optical signal to be tested and then input into the optical path switching unit;
the optical path switching unit is configured to input the optical signal to be tested into any one of the optical output channels;
each of the optical output channels is configured to input the signal to be tested into the band-pass filter correspondingly connected thereto.

4. The spectrum scanning assembly according to claim 3, **characterized in that** the optical path switching unit comprises m levels of optical switching assemblies, each level of the optical switching assemblies comprises several first input ends and several first output ends, the first input end of a first level of optical switching assembly is connected to the optical input channel, the first output end of a k-th level of optical switching assembly is connected to the first input end of a k+1-th level of optical switching assembly, and the plurality of first output ends of the m-th level of optical switching assembly are respectively connected to the plurality of optical output channels, k and n are both natural numbers, 1≤k<n, 2≤n; wherein:
the m levels of optical switching assemblies are configured to input the optical signal to be tested into any one of the optical output channels.

5. The spectrum scanning assembly according to claim 3, **characterized in that** the optical path switching unit comprises an optical power splitter, and the optical power splitter is respectively connected to the optical input channel and the plurality of optical output channels; wherein:
the optical power splitter is configured to input the optical signal to be tested into any one of the optical output channels.

6. The spectrum scanning assembly according to claim 3, **characterized in that** the optical path switching unit comprises an optical switch and a plurality of optical power splitters, the optical switch is respectively connected to the optical input channel and the plurality of optical power splitters, and the plurality of optical power splitters are respectively connected to the plurality of optical output channels, wherein:
the optical switch is configured to input the optical signal to be tested into any one of the optical power splitters;
each of the optical power splitters is configured to input the optical signal to be tested into the optical output channel correspondingly connected thereto.

7. The spectrum scanning assembly according to claim 3, **characterized in that** the optical path switching unit comprises an optical power splitter and a plurality of optical switches, the optical power splitter is respectively connected to the optical input channel and the plurality of optical switches, and the plurality of optical switches are respectively connected to the plurality of optical output channels, wherein:
the optical power splitter is configured to input the optical signal to be tested into any one of the optical switches;
each of the optical switches is configured to input the optical signal to be tested into the optical output channel correspondingly connected thereto.

8. The spectrum scanning assembly according to claim 2, **characterized in that** the optical waveguide assembly comprises a plurality of optical transmission channels, and the plurality of band-pass filters are sequentially connected through the plurality of optical transmission waveguides to form n levels of filtering structures, wherein:
the plurality of optical transmission waveguides are configured to sequentially input the optical signal to be tested into each of the band-pass filters of the n levels of filtering structures.

9. The spectrum scanning assembly according to claim 2, **characterized in that** the central wavelengths of passbands of the plurality of band-pass filters are different.

10. The spectrum scanning assembly according to claim 2, **characterized in that** each of the band-pass filters comprises one of a Bragg grating and a filter unit formed by cascading a plurality of micro-ring resonator cavities.

11. The spectrum scanning assembly according to claim 1, **characterized in that** the band-pass waveguide assembly comprises a wavelength division multiplexer and a plurality of optical output channels, and the optical output channels connect the wavelength division multiplexer to the plurality of micro-ring resonators respectively; wherein:
the wavelength division multiplexer is configured to divide the optical signal to be tested to form the plurality of band-pass optical signals, and then input into the plurality of micro-ring resonators respectively.

12. An optical semiconductor element, **characterized in that** the spectrum scanning assembly according to claim 1 is integrated on the optical semiconductor element.
